# FASCICULE DE BREVET EUROPEEN

(11) **EP 4 053 544 B1**
(45) Date de publication et mention de la délivrance du brevet: **28.02.2024**
(21) Numéro de dépôt: 22159111.8
(22) Date de dépôt: 28.02.2022
(51) Int. Cl.: G01N 21/53, G06V 10/20, G06V 20/17, G06V 10/82

(54) **PROCÉDÉ DE DÉTERMINATION, PAR UN AÉRONEF, ET D'ÉMISSION, PAR UNE STATION AU SOL, D'UNE INFORMATION SUR LA PORTÉE DE VISIBILITÉ OBLIQUE ET AÉRONEF COMPRENANT UN SYSTÈME DE MESURE D'UNE PORTÉE DE VISIBILITE OBLIQUE**
VERFAHREN ZUM BESTIMMEN, DURCH EIN FLUGZEUG, UND ZUM SENDEN, DURCH EINE BODENSTATION, VON INFORMATIONEN ÜBER DIE SCHRÄGE SICHTWEITE UND FLUGZEUG MIT EINEM SYSTEM ZUR MESSUNG DER SCHRÄGEN SICHTWEITE
METHOD FOR DETERMINING, BY AN AIRCRAFT, AND ISSUING, BY A GROUND STATION, INFORMATION ON THE OBLIQUE VISIBILITY RANGE AND AIRCRAFT COMPRISING A SYSTEM FOR MEASURING AN OBLIQUE VISIBILITY RANGE

(30) Priorité: 04.03.2021 FR 2102095
(43) Date de publication de la demande: 07.09.2022
(73) Titulaire: AIRBUS OPERATIONS (S.A.S.), 31060 Toulouse (FR)
(72) Inventeur: BOUSQUET, Fabrice, 31060 TOULOUSE (FR)
(74) Mandataire: Jardel, Marc Henry Philippe

(56) Documents cités:
- DE-A1- 3 316 600
- US-A1- 2020 023 831
- US-B2- 7 899 207

## Description

La présente invention concerne un procédé de détermination, par un aéronef, et d'émission, par une station au sol, d'une information sur la portée de visibilité oblique à des aéronefs en vol, ainsi qu'un aéronef comprenant un système de mesure d'une portée de visibilité oblique.

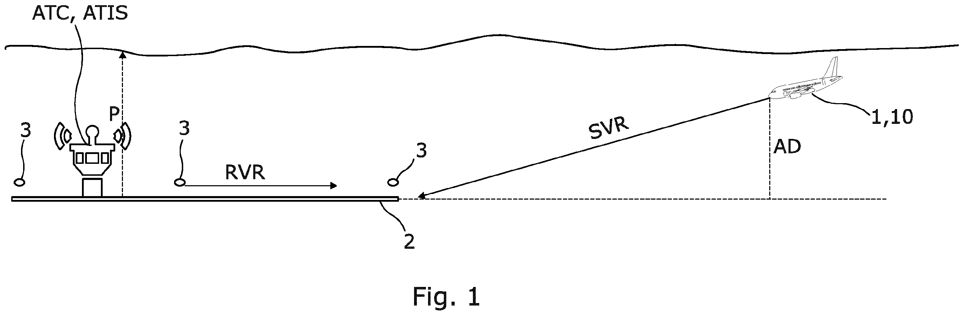

En référence avec la figure 1, les pilotes d'un aéronef 1 souhaitant effectuer une approche à vue vers une piste 2 d'un aéroport qui leur a été désignée par le contrôle du trafic aérien ATC, doivent avoir à une altitude prédéterminée AD, dite de décision, atteinte lors du segment d'approche finale, une visibilité maximale devant l'aéronef SVR suffisante pour distinguer clairement des références visuelles de piste (ex :les systèmes d'éclairage d'approche situées avant la piste, le seuil de piste, ou encore les marquages au sol de la piste) et confirmer au contrôle aérien que ces dernières visuelles sont bien visibles.

Des évènements tels que le brouillard ou un plafond nuageux P plus bas que l'altitude de décision AD peuvent contribuer à ce que les pilotes ne soient pas en mesure de voir les références visuelles de piste à l'altitude de décision. La visibilité maximale devant l'aéronef SVR est communément appelée portée de visibilité oblique en aéronautique (slant visibility range).

Dans un cas où les pilotes n'arrivent pas à distinguer les références visuelles de piste à l'altitude de décision AD, ces derniers peuvent procéder à une nouvelle tentative d'atterrissage, et si elle s'avère infructueuse, soit chercher une solution de déroutement vers un autre aéroport, ou soit, s'ils sont qualifiés pour les approches aux instruments et que l'aéronef est équipé pour de telles approches, initier un circuit d'approche aux instruments de la piste. Chacune de ces deux alternatives, outre le fait de décaler l'heure d'arrivée de l'aéronef qui a renoncé à l'atterrissage à vue, impacte le flux du trafic aérien environnant.

Actuellement, les pilotes d'un aéronef 1 n'ont pas de moyen précis pour savoir, avant de débuter l'approche à vue, si ils seront en mesure de voir les références visuelles de piste à l'altitude de décision. Néanmoins, afin d'aider les pilotes à anticiper la décision de commencer ou non l'approche à vue vers une piste, une station au sol (contrôle du trafic aérien ou autre instance) fournit deux indications de visibilité aux aéronefs 1, à savoir la valeur du plafond nuageux P ainsi que la valeur de la portée de visibilité de piste RVR (runway visibility range) déterminée à partir de mesures effectuées par un réseau de capteurs optiques 3 (transmissomètres/luminancemètres/ dispositifs de mesure de l'intensité du balisage de piste) arrangés au sol le long de la piste 2. La valeur de la portée de visibilité de piste RVR correspond à la distance maximale à laquelle il est possible, pour un opérateur au sol, de distinguer distinctement un objet du sol.

La demande de brevet DE 33 16 600 A1 décrit un système composé d'une pluralité de dispositifs optiques installés proche de la piste pour mesurer des paramètres de visibilité, et notamment de visibilité oblique, à fournir des indications de visibilité à des pilotes.

Le brevet US 7,899,207 B2 divulgue un système de mesure de la visibilité à partir d'images comprenant un système d'acquisition d'images et un dispositif de calcul de la visibilité à partir des images acquises par le dispositif d'acquisition d'images. Le système de mesure de la visibilité peut être embarqué sur un aéronef et configuré pour acquérir des images du sol le long de la trajectoire de l'aéronef afin de mesurer la visibilité le long de cette trajectoire. La mesure de visibilité peut être transmise à une station de sol qui peut l'envoyer à un système d'application.

Les indications de visibilité sont suffisamment pertinentes pour que dans la plupart des cas, si la valeur de la portée de visibilité de piste RVR et la valeur de plafond P sont tous deux supérieures à des valeurs seuils, il y a de fortes probabilités que les pilotes soient en mesure de voir distinctement les références visuelles de piste à l'altitude de décision AD. En revanche pour des conditions météorologiques particulières, il peut arriver que même si les indications de visibilité sont bonnes, les pilotes puissent ne pas être en mesure de voir les repères visuels de piste à l'altitude de décision AD.

De telles situations sont préjudiciables car elles perturbent le trafic aérien comme mentionné plus haut. Pour éviter de telles situations, il existe un besoin d'enrichir les indications de visibilité données par la station au sol avec une information éprouvée pour toutes les conditions météorologiques, afin que les pilotes puissent décider de continuer ou non l'approche à vue.

Un objet de la présente invention est de répondre en tout ou partie à ce besoin. A cet effet, l'invention concerne un procédé de détermination, par un aéronef, et d'émission par une station au sol, d'une information sur la portée de visibilité oblique d'une piste à une altitude prédéterminée telle que revendiquée dans la revendication 1.

L'invention concerne également un aéronef tel que revendiqué à la revendication 4.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1, déjà décrite, est une schématique d'un aéronef en approche à vue d'une piste d'un aéroport ;
- la figure 2 est une vue schématique d'un aéronef équipé d'un système de mesure d'une valeur de la portée de visibilité oblique selon l'invention ;
- la figure 3 est une vue schématique du système de mesure de la valeur de la portée de visibilité oblique équipant l'aéronef représenté à la figure 2 ;
- la figure 4 est une vue schématique représentant les étapes d'un procédé de détermination et d'émission par une station au sol d'une information sur la portée de visibilité oblique d'une piste selon l'invention.

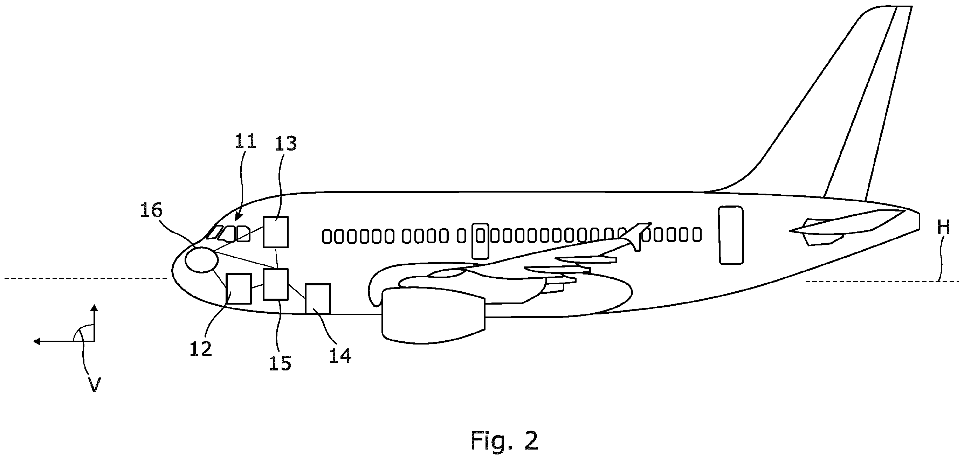

Selon l'invention et en référence avec la figure 2, au moins un aéronef 10 est équipé pour la mesure de la valeur de la portée de visibilité oblique SVR d'une piste 2. L'utilisation d'un tel aéronef 10 ayant mesuré la valeur de la portée de visibilité oblique d'une piste SVR lors de son atterrissage sur la piste 2 permet ensuite l'émission, par une station au sol, de l'information sur la portée de visibilité oblique à d'autres aéronefs souhaitant atterrir sur la piste 2 en utilisant une approche à vue.

L'aéronef 10 équipé pour la mesure de la valeur de la portée de visibilité oblique d'une piste SVR, comprend des éléments connus de l'état de la technique et qui équipent tous les aéronefs. Ces éléments connus sont :
- un poste de pilotage 11, situé à l'avant de l'aéronef 10, dans lequel sont arrangés une interface-homme machine, des écrans d'affichages et des haut-parleurs (non représentés sur les figures) ;
- des moyens de communications 12 pour l'échange de signaux entre l'aéronef 10 et des entités extérieures à l'aéronef (c.-à-d. d'autres aéronefs ou des stations au sol). Les moyens de communication 12 comprennent des dispositifs de communications radios (par exemple UHF ou VHF) complétés éventuellement de dispositifs de liaisons de données (datalink).
- des capteurs de vol 13 configurés pour mesurer des paramètres de vol de l'aéronef 10 (roulis, assiette, tangage, vitesse...),
- un système de positionnement 14 (type centrale inertielle et/ou moyens de positionnement satellites de type GPS/GLONASS/GALILEO) configuré pour déterminer la position courante (position géographique et altitude) de l'aéronef 10,
- un système de gestion de vol 15 qui recueille les données des capteurs de vol 13, du système de positionnement 14, ainsi que les consignes fournies par les pilotes de l'aéronef via l'interface homme-machine, pour assurer le suivi d'un plan de vol jusqu'à une piste de destination sur laquelle les pilotes ont décidés d'atterrir. Le système de gestion de vol 15 comprend au moins un calculateur et une unité de mémoire (non représentés) dans laquelle est enregistrée le plan de vol de l'aéronef 10, ainsi que des données sur les aéroports et leurs pistes (notamment la position, l'orientation des pistes). Le système de gestion de vol 15 est en outre connecté aux écrans d'affichage pour l'affichage d'information de navigation à destination des pilotes.

On notera que lorsque le pilote souhaite effectuer une approche à vue sur un aéroport, le pilote contacte le contrôleur du trafic aérien ATC en demandant l'autorisation d'atterrir sur l'aéroport avec le type d'approche souhaité par le pilote (exemple, approche à vue VOR-DME). Le contrôle du trafic aérien ATC, s'il donne l'autorisation d'atterrissage, indique la piste 2 en service. Le pilote, via l'interface homme-machine, indique la piste 2 au système de gestion de vol 15 pour assurer le guidage de l'aéronef vers la piste 2 et indique également l'altitude de décision AD associée à la piste que le pilote a obtenu par la lecture des règles d'approche à vue de la piste, contenues dans un classeur ou une tablette tactile à sa disposition. Quand l'aéronef 10 vole sur le segment final de l'approche de la piste 2, et au franchissement de l'altitude de décision AD, le système de gestion de vol 15 fait émettre, via un haut-parleur situé dans le cockpit, une alerte sonore « MINIMUM » à l'attention du pilote lui indiquant la franchissement de l'altitude de décision AD.

L'aéronef 10 selon l'invention comprend en outre un système de mesure de la valeur de la portée de visibilité oblique d'une piste 16. Le système de mesure de la valeur de la portée de visibilité oblique d'une piste 16 est connecté aux capteurs 13, au système de gestion de vol 15, ainsi qu'aux moyens de communication 12 pour transmettre l'information sur la portée de visibilité oblique SVR vers une station au sol.

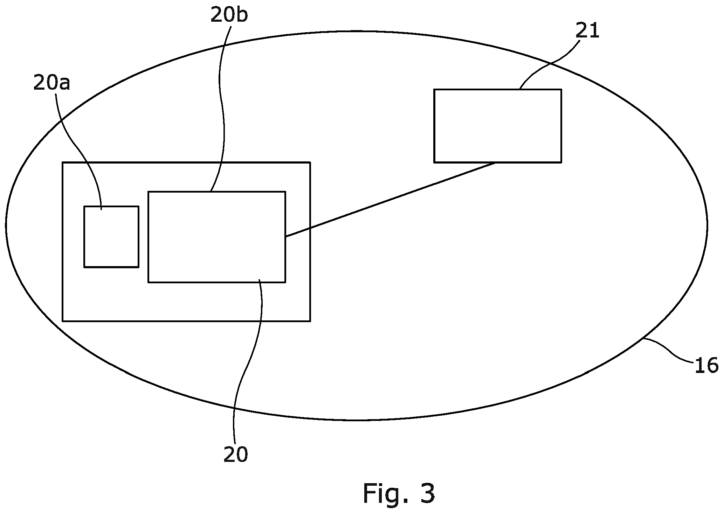

En référence avec la figure 3, le système de mesure de la valeur de la portée de visibilité oblique d'une piste 16 comprend un dispositif d'acquisition d'image 20 et un dispositif de calcul 21, ce dernier étant de type unité centrale avec un processeur et des mémoires (non représentés).

Le système d'acquisition d'image 20 comprend un capteur optique matriciel 20b associé à un système optique de formation d'image 20a.

Le système d'acquisition d'image 20 est situé à l'avant de l'aéronef 10, soit à l'extérieur de l'aéronef (il est dans ce cas arrangé sur le nez de l'aéronef ou sur la partie avant d'une aile, c'est-à-dire sur ou proche du bord d'attaque de l'aile) ou soit à l'intérieur de l'aéronef (il est dans ce cas arrangé dans le poste de pilotage 11 de l'aéronef). Le système d'acquisition d'image 20 est configuré pour acquérir une image d'une scène environnante située à l'extérieur et devant l'aéronef 10, ladite scène pouvant comporter au moins une référence visuelle de piste. Le capteur optique 20b génère un signal comprenant des données de l'image acquise.

Le système optique de formation d'image 20a est couplé au capteur optique 20b et comprend au moins une lentille réfractive, par exemple un système objectif-oculaire.

Les caractéristiques du système d'acquisition d'image 20 sont choisies pour que ce dernier ait des capacités de détection similaires à celles d'un oeil humain emmétrope et la même vue que celle qu'aurait un pilote assis sur son siège dans le poste de pilotage. Ainsi :
- le système d'acquisition d'image 20 a un champ de vision large ;
- l'axe de visée (normal au plan du capteur optique 20b) du système d'acquisition d'image 20 est orienté sensiblement parallèlement au plan horizontal H l'aéronef 10. De préférence, il est également orienté sensiblement parallèle au plan longitudinal médian V de l'aéronef.
- le système d'acquisition d'image 20 a une grande profondeur de champ pour acquérir une image nette dans une région étendue de part et d'autre d'un plan de mise au point,
- le capteur optique 20b a une sensibilité spectrale dans le spectre visible (400 - 750 nm) et une résolution adaptée pour résoudre un objet de quelques dizaines de centimètres de hauteur, par exemple 30 cm, située à une distance de 1 km.

Le dispositif de calcul 21 reçoit en entrée le signal généré par le système d'acquisition d'image 20 et met en oeuvre des algorithmes de traitement d'image pour, à partir dudit signal, détecter des références visuelles de piste dans l'image et mesurer la distance entre l'aéronef 10 et chaque référence de piste détectée.

Dans le détail, la détection de références visuelles de piste dans l'image est effectuée par un algorithme de détection d'objets utilisant une bibliothèque de modèles de références visuelles de piste (exemple : lumières de la rampe d'approche, lumières du seuil de piste, seuil de piste, zone de toucher...) enregistrée dans les mémoires du dispositif de calcul 21. Un algorithme avec un temps d'exécution rapide, inférieur à une seconde, est utilisé. L'algorithme est, par exemple, basé sur la méthode de Viola et Jones ou est de de type YOLO, SSD ou encore Fast R-CNN.

La mesure de distance entre une référence visuelle détectée sur l'image et l'aéronef 10 est effectuée par la mise en oeuvre d'un algorithme de mesure de distance qui utilise comme données d'entrées :
- les paramètres de vol fournis par les capteurs de vol 13 (la hauteur de l'aéronef, l'angle de tangage de l'aéronef, c-a-d l'angle entre le plan horizontal de l'aéronef H et le sol considéré plan),
- le champ de vision du capteur optique 20b qui est une donnée invariable et enregistrée dans les mémoires du dispositif de calcul 21,
- la distance sur l'image entre la référence visuelle optique et le centre de l'image.

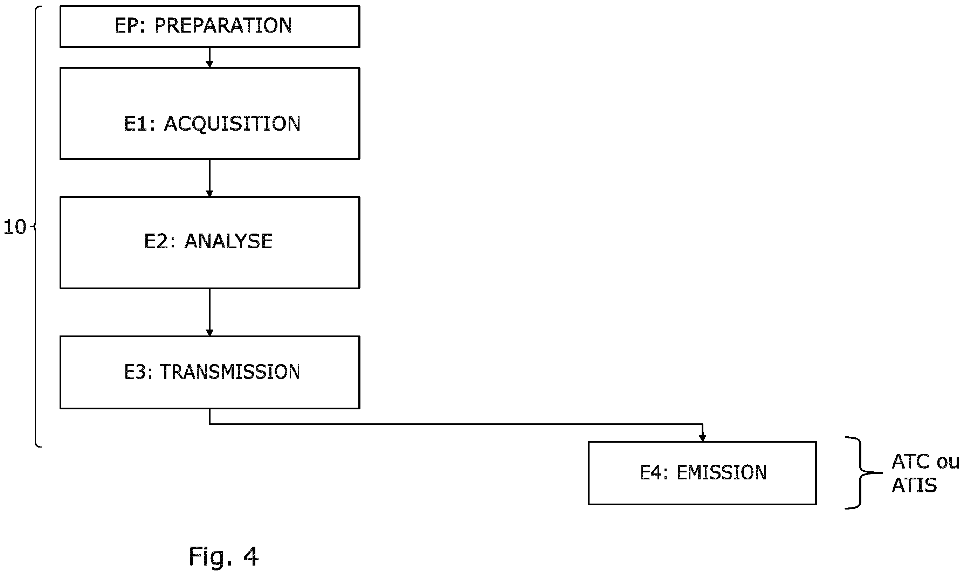

Un procédé de détermination, par un aéronef équipé d'un système de mesure de la valeur de la portée de visibilité oblique d'une piste 16, et d'émission, par une station au sol, d'une information sur la portée de visibilité oblique associée à une piste 2, va être détaillé ci-après en relation avec la figure 4.

Dans une étape préalable d'action EP, mise en oeuvre lors de la préparation de l'approche à vue d'une piste 2, le pilote de l'aéronef 10 équipé pour la mesure d'une valeur de la portée de visibilité oblique 16, indique comme paramètres du système de gestion de vol 15, à la fois la piste 2 qui lui a été attribuée par le contrôle du trafic aérien ATC, ainsi que l'altitude de décision AD associée à la piste 2 pour l'approche considérée par le pilote. L'entrée de ces deux informations active le système de mesure de la valeur de la portée de visibilité oblique 16.

Dans une première étape E1, dite d'acquisition, le système de mesure de la valeur de la portée de visibilité oblique 16 acquiert une image d'une scène environnante située à l'extérieur de l'aéronef 10, la dite scène pouvant comporter au moins une référence visuelle de piste. L'acquisition de l'image est commandée par le système de gestion de vol 15, lorsque l'aéronef 10 est sur le segment d'approche finale de la piste 2 et à l'altitude de décision AD.

Dans une seconde étape E2, dite d'analyse, le système de mesure de la valeur de la portée de visibilité oblique 16 met en oeuvre des algorithmes de traitement d'image pour détecter des références visuelles de piste dans l'image et mesurer la distance entre l'aéronef 10 et chaque référence de piste détectée.

A l'issue de cette étape E2 d'analyse, le système de mesure de la valeur de la portée de visibilité oblique 16 génère un signal comprenant une information sur la portée de visibilité oblique, cette information étant :
- la valeur de la portée de visibilité oblique SVR qui est la distance entre la référence de piste et l'aéronef 10 si une seule référence de piste a été détectée à l'image, ou qui est la distance maximale qui a été mesurée entre une référence de piste et l'aéronef 10 si plusieurs référence de piste ont été détectées à l'image,
- une information selon laquelle aucune ne référence visuelle de piste n'a pu être détectée.

Suite à l'étape E2 d'analyse, et dans une étape E3, dite de transmission, l'aéronef 10, transmet, via les moyens de communication 12, un signal comprenant l'information sur la portée de visibilité oblique. La station au sol est, par exemple, le contrôle du trafic aérien ATC ou une station automatique de diffusion ATIS (pour Automatic Terminal Information Service) qui permet aux pilotes de recevoir en continu des informations sur les pistes de l'aéroport auquel la station ATIS est associée.

Suite à l'étape E3 de transmission, et dans une étape E4 d'émission, la station au sol émet un signal à destination du ou des aéronefs en vol dont les moyens de communications sont réglés sur la fréquence de la station au sol. Le signal comprend l'information sur la portée de visibilité oblique.

Le signal reçu par les moyens de communications d'un aéronef est soit transcrit en un son par les haut-parleurs du poste de pilotage, soit transcrit sous forme d'une information affichée sur un écran du poste de pilotage.

Si la station au sol est le contrôle du trafic aérien, le signal comprend, de préférence, outre l'information sur la portée de visibilité oblique, la valeur du plafond nuageux P ainsi que la valeur de la portée de visibilité de piste RVR.

L'invention permet d'enrichir les deux indications de visibilité déjà fournies aux pilotes par la station au sol, par une information sur la portée de visibilité oblique à l'altitude de décision AD.

Avec l'information sur la portée de visibilité oblique associée à la piste, les pilotes disposent d'une indication de visibilité supplémentaire fiable leur permettant de prendre une décision sur la possibilité ou non d'engager une approche à vue vers la piste 2.

L'information sera d'autant plus fiable, car mise à jour fréquemment, à mesure que les aéronefs seront équipés de systèmes de mesures de la valeur de visibilité oblique 16 tels que décrits plus haut. Ainsi, à chaque atterrissage d'un aéronef équipé d'un système de mesure de la valeur de visibilité oblique 16 tel que décrit plus haut, le procédé tel que décrit ci-dessus est mis en oeuvre.

Dans tous les cas de figures, c'est-à-dire qu'une référence de piste ait pu ou n'ait pas pu être détectée à l'étape E1 de recherche, l'étape d'émission E4 est, de préférence mise en oeuvre uniquement pendant une durée prédéterminé après l'étape de transmission E3, afin de prendre en compte de possibles évolutions favorables de la visibilité. La durée est, par exemple, de 10 minutes. Suite à cette durée, l'information sur la portée de visibilité déterminée par l'aéronef 10 n'est plus émise par la station au sol.

Dans le cas où la station au sol est le contrôle du trafic aérien ATC, et afin de ne pas surcharger les communications, le contrôle aérien transmet l'information sur la portée de visibilité oblique seulement aux aéronefs à qui il a désigné la piste comme piste d'atterrissage pour une approche à vue.

## Revendications

1. Procédé de détermination, par un aéronef, et d'émission par une station au sol (ATIS, ATC), d'une information sur la portée de visibilité oblique (SVR) d'une piste (2) à une altitude prédéterminée, dite de décision, définie dans les règles d'approches à vue de la piste, la piste (2) étant pourvue d'une pluralité de références visuelles de piste placées au sol, **caractérisée** ce que le procédé comprend les étapes successives suivantes :
- une étape d'acquisition (E1), par un premier aéronef (10) équipé d'un système de mesure de la valeur de la portée de visibilité oblique (16), d'une image d'une scène environnante située à l'extérieur et devant ledit aéronef (10), ladite scène pouvant comporter au moins une référence visuelle de piste, l'image étant acquise à l'altitude de décision (AD) et lors de l'approche de la piste ;
- une étape d'analyse (E2) de l'image mise en oeuvre par le premier aéronef (10), dans laquelle le système de mesure de la valeur de la portée de visibilité oblique (16) met en oeuvre des algorithmes de traitement d'image pour détecter des références visuelles de piste dans l'image et mesurer la distance entre l'aéronef (10) et chaque référence de piste détectée ;
- une étape de transmission (E3) à la station au sol (ATIS, ATC), mise en oeuvre par le premier aéronef (10), d'une information sur la portée de visibilité oblique associée à la piste, l'information comprenant une distance entre une référence visuelle de piste et l'aéronef mesurée à l'étape d'analyse (E2) si au moins une référence de piste a été détectée, ou sinon, une information selon laquelle aucune référence visuelle de piste n'a pu être détectée ;
- une étape d'émission (E4), par la station au sol (ATIS, ATC), de l'information sur la portée de visibilité oblique associée à la piste à destination d'au moins un second aéronef en vol.

2. Procédé de détermination et d'émission selon la revendication 1, **caractérisé en ce que** l'information sur la portée de visibilité oblique comprend la distance maximale mesurée entre une référence de piste et l'aéronef (10) si plusieurs références de piste sont détectées à l'image

3. Procédé de détermination et d'émission par une station au sol (ATIS, ATC) selon l'une quelconque des revendications 1 à 2, **caractérisé en ce que** l'étape (E4) d'émission est mise en oeuvre uniquement pendant un temps prédéterminé débutant après la mise en oeuvre de l'étape de transmission (E3).

4. Aéronef (10) comprenant des capteurs de vol (13) configurés pour mesurer des paramètres de vol de l'aéronef (10), **caractérisé en ce qu'**il comprend un système de mesure de la valeur de la portée de visibilité oblique (16) comprenant un système d'acquisition d'image (20) arrangé à l'avant de l'aéronef et un dispositif de calcul (21), le système d'acquisition d'image (20) étant configuré pour acquérir une image d'une scène environnante située à l'extérieur et devant l'aéronef (10), ladite scène pouvant comporter au moins une référence visuelle de piste, et pour générer un signal comprenant des données de l'image acquise, le dispositif de calcul (21) recevant en entrée le signal généré par le système d'acquisition d'image (20) et étant configuré pour mettre en oeuvre des algorithmes de traitement d'image pour, à partir dudit signal et des paramètres de vol, détecter des références visuelles de piste dans l'image et mesurer la distance entre l'aéronef (10) et chaque référence de piste détectée.

5. Aéronef (10) selon la revendication 4, **caractérisé en ce que** le système d'acquisition d'image (20) comprend un capteur optique matriciel (20b) avec une sensibilité dans le visible.

6. Aéronef (10) selon la revendication 5, **caractérisé en ce que** le système d'acquisition d'image (20) comprend un système optique de formation d'image (20a) associé au capteur optique matriciel (20b).

7. Aéronef selon l'une quelconque des revendications 4 à 6, **caractérisé en ce que** le système d'acquisition d'image (20) a un axe de visée orienté parallèlement à un plan horizontal (H) de l'aéronef (10).

8. Aéronef selon la revendication 7, **caractérisé en ce que** le système d'acquisition d'image (20) a un axe de visée orienté parallèlement à un plan longitudinal médian (V) de l'aéronef.

9. Aéronef selon l'une quelconque des revendications 4 à 8, l'aéronef (10) comprenant un poste de pilotage (11), **caractérisé en ce que** le système d'acquisition d'image (20) est situé dans le poste de pilotage de l'aéronef (11).

## Patentansprüche

1. Verfahren zum Bestimmen, durch ein Flugzeug, und zum Senden, durch eine Bodenstation (ATIS, ATC), einer Information über die Schrägsichtweite (SVR) einer Landebahn (2) in einer vorbestimmten Höhe, Entscheidungshöhe genannt, die in den Sichtanflugregeln der Landebahn festgelegt ist, wobei die Landebahn (2) mit einer Mehrzahl von am Boden angeordneten visuellen Landebahnreferenzen versehen ist, **dadurch gekennzeichnet, dass** das Verfahren die folgenden aufeinander folgenden Schritte umfasst:
- einen Schritt des Erfassens (E1), durch ein erstes Flugzeug (10), das mit einem System zum Messen des Werts der Schrägsichtweite (16) ausgestattet ist, eines Bilds einer Umgebungsszene, die außerhalb und vor dem Flugzeug (10) gelegen ist, wobei die Szene mindestens eine visuelle Landebahnreferenz enthalten kann, wobei das Bild in der Entscheidungshöhe (AD) und beim Anflug an die Landebahn erfasst wird;
- einen Schritt des Analysierens (E2) des Bildes, der von dem ersten Flugzeug (10) ausgeführt wird, bei dem das System zum Messen des Werts der Schrägsichtweite (16) Bildverarbeitungsalgorithmen ausführt, um visuelle Landebahnreferenzen in dem Bild zu detektieren und den Abstand zwischen dem Flugzeug (10) und jeder detektierten Landebahnreferenz zu messen;
- einen Schritt des Übertragens (E3) an die Bodenstation (ATIS, ATC), der von dem ersten Flugzeug (10) ausgeführt wird, einer Information über die der Landebahn zugeordnete Schrägsichtweite, wobei die Information einen Abstand zwischen einer visuellen Landebahnreferenz und dem Flugzeug umfasst, der im Schritt des Analysierens (E2) gemessen wurde, wenn mindestens eine Landebahnreferenz detektiert worden ist, oder andernfalls einer Information, der zufolge keine visuelle Landebahnreferenz detektiert werden konnte;
- einen Schritt des Sendens (E4), durch die Bodenstation (ATIS, ATC), der Information über die der Landebahn zugeordnete Schrägsichtweite an mindestens ein zweites im Flug befindliches Flugzeug.

2. Verfahren zum Bestimmen und Senden nach Anspruch 1, **dadurch gekennzeichnet, dass** die Information über die Schrägsichtweite den gemessenen maximalen Abstand zwischen einer Landebahnreferenz und dem Flugzeug (10) umfasst, wenn mehrere Landebahnreferenzen in dem Bild detektiert werden.

3. Verfahren zum Bestimmen und Senden, durch eine Bodenstation (ATIS, ATC), nach einem der Ansprüche 1 bis 2, **dadurch gekennzeichnet, dass** der Schritt (E4) des Sendens nur während einer vorbestimmen Zeit ausgeführt wird, die nach der Ausführung des Schritts des Übertragens (E3) beginnt.

4. Flugzeug (10), das Flugsensoren (13) umfasst, die dazu ausgestaltet sind, Flugparameter des Flugzeugs (10) zu messen, **dadurch gekennzeichnet, dass** es ein System zum Messen des Werts der Schrägsichtweite (16) umfasst, das ein am Bug des Flugzeugs angeordnetes Bilderfassungssystem (20) und eine Rechenvorrichtung (21) umfasst, wobei das Bilderfassungssystem (20) dazu ausgestaltet ist, ein Bild einer Umgebungsszene zu erfassen, die außerhalb und vor dem Flugzeug (10) gelegen ist, wobei die Szene mindestens eine visuelle Landebahnreferenz enthalten kann, und ein Signal zu erzeugen, das Daten des erfassten Bildes umfasst, wobei die Rechenvorrichtung (21) im Eingang das von dem Bilderfassungssystem (20) erzeugte Signal empfängt und dazu ausgestaltet ist, Bildverarbeitungsalgorithmen auszuführen, um anhand des Signals und der Flugparameter visuelle Landebahnreferenzen in dem Bild zu detektieren und den Abstand zwischen dem Flugzeug (10) und jeder detektierten Landebahnreferenz zu messen.

5. Flugzeug (10) nach Anspruch 4, **dadurch gekennzeichnet, dass** das Bilderfassungssystem (20) einen optischen Matrixsensor (20b) mit einer Empfindlichkeit im sichtbaren Bereich umfasst.

6. Flugzeug (10) nach Anspruch 5, **dadurch gekennzeichnet, dass** das Bilderfassungssystem (20) ein optisches Bilderzeugungssystem (20a) umfasst, das dem optischen Matrixsensor (20b) zugeordnet ist.

7. Flugzeug nach einem der Ansprüche 4 bis 6, **dadurch gekennzeichnet, dass** das Bilderfassungssystem (20) eine Zielachse hat, die parallel zu einer horizontalen Ebene (H) des Flugzeugs (10) ausgerichtet ist.

8. Flugzeug nach Anspruch 7, **dadurch gekennzeichnet, dass** das Bilderfassungssystem (20) eine Zielachse hat, die parallel zu einer Längsmittelebene (V) des Flugzeugs ausgerichtet ist.

9. Flugzeug nach einem der Ansprüche 4 bis 8, wobei das Flugzeug (10) ein Cockpit (11) umfasst, **dadurch gekennzeichnet, dass** das Bilderfassungssystem (20) in dem Cockpit des Flugzeugs (11) gelegen ist.

## Claims

1. Method for determining, by way of an aircraft, and for transmitting, by way of a ground station (ATIS, ATC), slant visibility range (SVR) information for a runway (2) at a predetermined altitude, called decision altitude, defined in the visual approach rules for the runway, the runway (2) being provided with a plurality of visual runway references placed on the ground, **characterized in that** the method comprises the following successive steps:
- a step of acquiring (E1), by way of a first aircraft (10) equipped with a system for measuring the value of the slant visibility range (16), an image of a surrounding scene located outside and ahead of said aircraft (10), said scene possibly containing at least one visual runway reference, the image being acquired at the decision altitude (AD) and when approaching the runway;
- a step of analysing (E2) the image, implemented by the first aircraft (10), in which the system for measuring the value of the slant visibility range (16) implements image processing algorithms in order to detect visual runway references in the image and measure the distance between the aircraft (10) and each detected runway reference;
- a step of transmitting (E3) slant visibility range information associated with the runway to the ground station (ATIS, ATC), implemented by the first aircraft (10), the information comprising a distance between a visual runway reference and the aircraft measured in the analysis step (E2) if at least one runway reference has been detected, or if not information according to which no visual runway reference was able to be detected;
- a step of transmitting (E4), by way of the ground station (ATIS, ATC), the slant visibility range information associated with the runway to at least one second aircraft in flight.

2. Determination and transmission method according to Claim 1, **characterized in that** the slant visibility range information comprises the maximum distance measured between a runway reference and the aircraft (10) if multiple runway references are detected in the image.

3. Method for determination and transmission by way of a ground station (ATIS, ATC) according to either one of Claims 1 and 2, **characterized in that** the transmission step (E4) is implemented only for a predetermined time starting after the transmission step (E3) has been implemented.

4. Aircraft (10) comprising flight sensors (13) that are configured so as to measure flight parameters of the aircraft (10), **characterized in that** it comprises a system for measuring the value of the slant visibility range (16) comprising an image acquisition system (20) arranged at the front of the aircraft and a computing device (21), the image acquisition system (20) being configured so as to acquire an image of a surrounding scene located outside and ahead of the aircraft (10), said scene possibly containing at least one visual runway reference, and to generate a signal comprising data of the acquired image, the computing device (21) receiving the signal generated by the image acquisition system (20) at input and being configured so as to implement image processing algorithms in order, based on said signal and the flight parameters, to detect visual runway references in the image and measure the distance between the aircraft (10) and each detected runway reference.

5. Aircraft (10) according to Claim 4, **characterized in that** the image acquisition system (20) comprises a matrix optical sensor (20b) with a sensitivity in the visible.

6. Aircraft (10) according to Claim 5, **characterized in that** the image acquisition system (20) comprises an optical image-forming system (20a) associated with the matrix optical sensor (20b).

7. Aircraft according to any one of Claims 4 to 6, **characterized in that** the image acquisition system (20) has a line of sight oriented parallel to a horizontal plane (H) of the aircraft (10).

8. Aircraft according to Claim 7, **characterized in that** the image acquisition system (20) has a line of sight oriented parallel to a median longitudinal plane (V) of the aircraft.

9. Aircraft according to any one of Claims 4 to 8, the aircraft (10) comprising a cockpit (11), **characterized in that** the image acquisition system (20) is located in the cockpit of the aircraft (11).
